# EUROPEAN PATENT SPECIFICATION

(11) **EP 1 739 882 B1**
(45) Date of publication and mention of the grant of the patent: **06.07.2011**
(21) Application number: 06075583.2
(22) Date of filing: 10.03.2006
(51) Int. Cl.: H04L 12/28

(54) **Method for dynamically connecting a computer, an update server, a computer program product and a system**
Verfahren zur dynamischen Verbindung eines Computers, ein Verbuchungsserver, Computerprogrammprodukt und ein System
Méthode pour connecter de façon dynamique un ordinateur, serveur de mise à jour, logiciel et système

(30) Priority: 10.03.2005 NL 1028507
(43) Date of publication of application: 03.01.2007
(60) Divisional application: 11001750.6
(73) Proprietor: World Wide Technical Service NV, Willemstad, Curaçao (AN)
(72) Inventor:
(74) Representative: Hoeben, Ferdinand Egon

(56) References cited:
- WO-A-01/35585
- WO-A-2004/031488
- US-A1- 2004 122 952
- US-A1- 2004 153 545

## Description

The present invention relates to a method for connecting a computer, an update server, software and a system in dynamic manner.

Many systems and methods are known for connecting a computer to a computer network such as the Internet. Computers can be connected via cabled networks such as telephony and data networks, and this is possible via mobile networks. Both forms have advantages and drawbacks which are offset against each other, such as data transport speed, reliability of the service, cost and convenience of use. For wired connections it is necessary for a physical connection to be laid by means of cables, these connections having a relatively high speed at low cost. For mobile connections it is the case that flexibility is possible because cables are unnecessary. This connection method does however generally have a slower transport speed and generally has the further drawback of relatively high cost. In practice such drawbacks are more than compensated by the advantages, such as the flexibility, whereby mobile connections are much used.

For the user there is a choice of a large variety of mobile connection options, both in respect of choice of connecting devices such as mobile telephones with modems, data cards which can be coupled to the computer, modems, network cards, WiFi equipment, and in respect of mobile network technologies such as GSM, UMTS, GPRS, WiFi, CSD and EDGE. Each of these connecting devices and network technologies require the configuration of settings in connecting software, whether this forms part of the operating system of the PC or of more network or equipment-specific software.

In addition, each time another connection is necessary this connection has to be started up. Connection software is known with which profiles for such connections can be compiled in which all required data for starting up the connection can be stored. When the connection must be used, the software can then be instructed to set up the connection on the basis of the profile. Making of the connection requires for this purpose actions on the part of the user of the computer. This is particularly impractical in a changing environment, such as during travel, where a new connection must frequently be chosen because an existing connection is lost. The network provision can change even when the computer is stationary. It may also be the case that a connection is being used which is slow or expensive while a better alternative is available without a user being aware of this.

From WO 2004/031488, smart connection management software for portable devices that is capable of switching connections based on selection criteria is known. In this document, it is disclosed that the selection criteria may be downloaded from a server such that the user is not required to enter his own selection criteria or for a company to maintain some level of control over its user base with regard to the used connections.

US2004/0153545 discloses a method for managing network bandwidth where agents on computers in a distributed system communicate monitored socket statuses back to a control modules on a control server.

In order to obviate such drawbacks the present invention provides a method according to claim 1.

A method according to the present invention provides the advantage that the most desirable connection is automatically used in each case on the basis of a priority. If the speed of connection is important, the connection with the highest possible speed is chosen on the basis of the priorities. If for instance a WiFi connection is possible while a connection is already present via a GSM network, the relatively slow GSM connection will be stopped and the relatively fast WiFi will be set up. The user can optionally be asked here whether he/she finds this desirable, but the user does not have to input any settings for the connection or to think about the connections, since this is fixed in the priorities. These priority settings can be modified as the connection wishes of the user of the computer change, whereafter connection is made on the basis of modified priority settings.

Connections are defined as a set of data comprising parameters of connecting device and network with which the connection is brought about.

In a first preferred embodiment the step in the method for defining the set of available network connections comprises steps for detecting connecting devices. It hereby becomes possible for the purpose of defining the available network connections to take account of the fact that a device is detectable and therefore suitable for use.

In a further preferred embodiment the method comprises steps for obtaining data relating to the connecting devices. An advantage hereof is that data relating to the capacities of the device are available for use thereof.

The set of the available connections is preferably defined on the basis of available connecting devices. An advantage hereof is that the functionalities of the connecting devices can be used to define the set of connections which can be made to the connecting device. Examples hereof are that a CSD connection and a GPRS connection can be made with a Nokia™ 6230 and that a GPRS connection and a UMTS connection can be made with a Vodafone™ data card. If both of these connecting devices are detected, a CSD, GPRS, and a UMTS connection can in any case be defined.

In a further preferred embodiment the method comprises steps for installing connecting devices. This installation has the advantage that the user can suffice with coupling of a new connecting device, whereafter all data for performing steps according to the invention relating to the device can be carried out automatically without the user having to install or configure devices at the level of for instance the operating system of the computer, whether this be a PC, PDA or other device comprising a computer.

The method preferably comprises steps for displaying the set of available network connections in a list of a user interface. The user has the advantage here that only the connections on the basis of the possibilities of the detected connecting devices are displayed. This is advantageous because, on the basis of a number of devices and networks and all parameters thereof, an enormous number of different network connections can be defined, on the basis of which the user then has to give his/her priorities. A connection definition requires an amount of data relating to inter alia the connecting device, the network, the operator and/or a service provider. Particularly when a large part of these connections is not available due to the absence of the network and/or the connecting device which can connect to a network, and/or parameters dependent on operator or service provider, the connection which do however have data available according to prior art methods will then be displayed normally but not in the method according to the invention, whereby only a short priority list need be compiled in each case on the basis of availability.

In a further preferred embodiment the connections can be categorized on the basis of a property of being able to function under a flexible connection regime, such as mobile IP, comprising steps for:
- changing regime if the candidate connection requires a regime other than the existing connection,
- connecting to network connections under the flexible regime if the candidate can function under a flexible connection regime,
- connecting under a normal regime if the candidate does not function under a flexible connection regime.

This embodiment has the further advantage that changing connection can be carried out without applications which are making use of the connection being disrupted. Asking the user whether the connection can be changed is hereby less important for instance than when the change of connection can influence user applications operational on the computer.

A further embodiment comprises steps for changing connection within the predetermined repeat time within the category of connections able to function under the flexible regime, comprising the steps for:
- determining a set of connections which function under the flexible regime and which are available by means of checking for availability,
- determining the available connection with the highest priority as flexible candidate,
- changing connection from the existing connection to the flexible candidate,
- repeating these steps after a predetermined second time period or preventing a predetermined event.

This embodiment for instance has the further advantage that it is possible to change connection relatively frequently, for instance in conditions where networks have a small range. If travel is taking place in a vicinity with many WiFi hotspots, and these have a high priority because of the data transport speed, because these have a small range compared to a wireless telephone network, the laptop can then often move out of the range of a hotspot but then still have a temporary connection via a telephone network. All these changes are realized by the software performing the method without this interrupting the user in his/her work with the computer.

A further embodiment comprises steps for downloading from an update server data relating to connections, connecting devices, networks, service modules and/or a user interface, wherein these data are transferred in a standardized format such as an XML format. An advantage hereof is that the language of the graphic user interface of the software can for instance be changed without a new version of the software build having to be made. In addition, the server can be used to provide additional services to the users of the system according to the present invention.

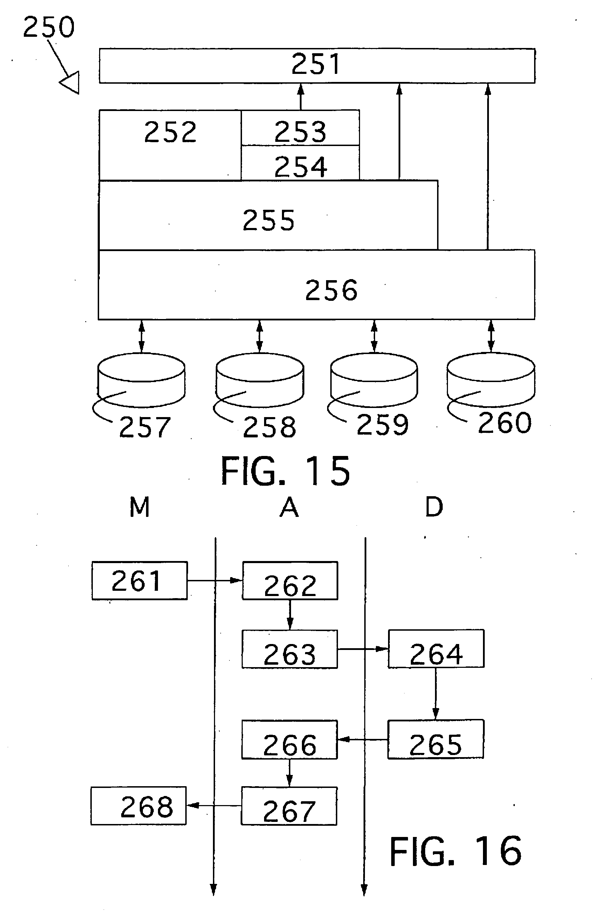

A further aspect of this embodiment is that new data relating to new connecting devices are added, whereby the user can continuously apply any desired new device for his/her connections without problems. This is important because manufacturers of such devices and networks are continuously producing new models and technologies for the purpose of improving their competitive position. An object of this aspect is that definition data relating to storage structures also remain usable after modifications to the system and/or the connecting device. The connecting device in which this embodiment is particularly important comprises a mobile telephone or a module with the functionality of a mobile telephone, but can also be a disk drive or a monitor or a device as defined in the context of the so-called Windows Driver Development Kit (WDDK). Use is for instance made for this embodiment of an API such as the setup API which can be used with the WDDK. The data of this embodiment are stored in a package and comprise a manifest. This manifest comprises a set of data comprising device definitions, files relating to a device setting and instructions for processing the device setting elements, the individual devices. Further advantages of this embodiment are described with reference to fig. 15.

The data transfer is preferably carried out on the basis of a highly condensed display of the configuration data of the computer. The data transfer can hereby be considerably shortened. An example hereof is that use is made of a hash of the configuration data, on the basis of which the server knows which software with which settings is present on the computer on which the method according to the present invention is performed.

It is further recommended that the data for transmission are encoded, thereby preserving the confidentiality of the data.

In a further preferred embodiment of the present invention steps are provided for selecting a connection under roaming conditions, wherein a priority can be assigned to parameters of connections. A user of the method can hereby determine the conditions under which a connection is made without always having to input data for this purpose.

A further aspect of the present invention relates to an update server according to claim 18

An advantage of such an embodiment is that a method as described in the foregoing can be performed wherein the data can be centrally stored and/or processed on the update server. A part of the method can also be performed on the server subject to the requirements of for instance the client device.

A further aspect of the present invention relates to a computer program product according to claim 19.

Such software has,among others, advantages as already indicated in the foregoing with reference to the method.

A further aspect of the present invention relates to a system for updating connection data on a client computer, according to claim 20.

Further advantages, features and details of the present invention will be described on the basis of embodiments according to the present invention with reference to the accompanying figures, in which:
- Fig. 1 is a schematic representation of an embodiment according to the present invention,
- Fig. 2-14 are flow diagrams of further embodiments according to the present invention,
- Fig. 15 is a schematic representation of a further embodiment according to the present invention.

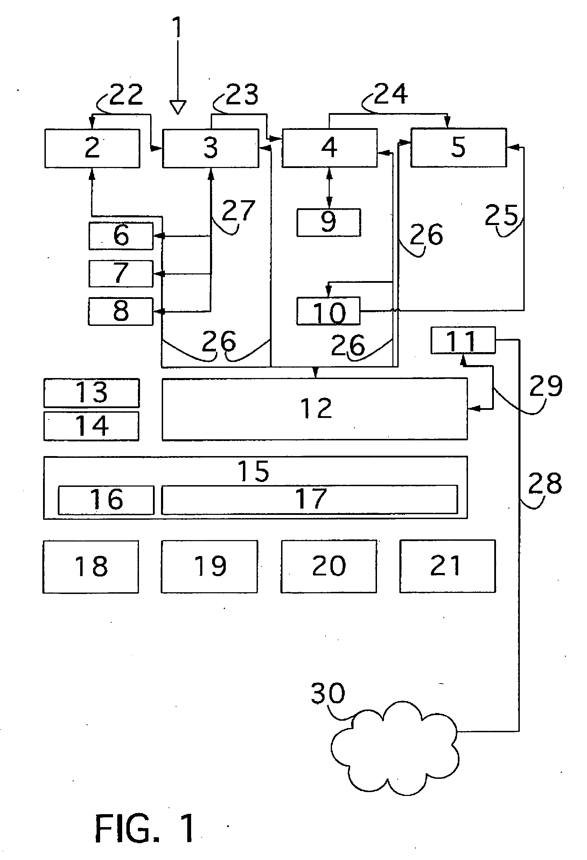

A first preferred embodiment according to the present invention (Fig. 1) relates to a connecting system 1 comprising a so-called engine 2-14 and a graphic user interface 15-21. The engine comprises a number of software modules which can be loaded into a memory of computer (not shown) and which function on a central processing unit of the computer. The software is provided with data from an update server 30 coupled to Internet. Modules 6-8 of the software further enable the computer to connect to networks enabling a coupling to Internet by means of hardware descriptions in module 3 via the corresponding hardware such as a mobile telephone or a WLAN device. For this purpose data concerning the technical parameters of the network are stored in module 4, data concerning the connecting devices in module 3, data concerning the connections in module 5 and data concerning possible messages in module 2.

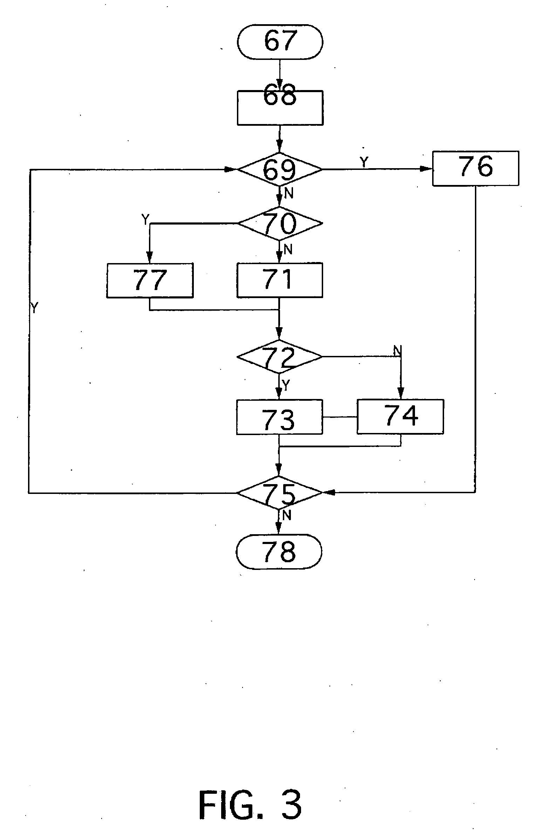

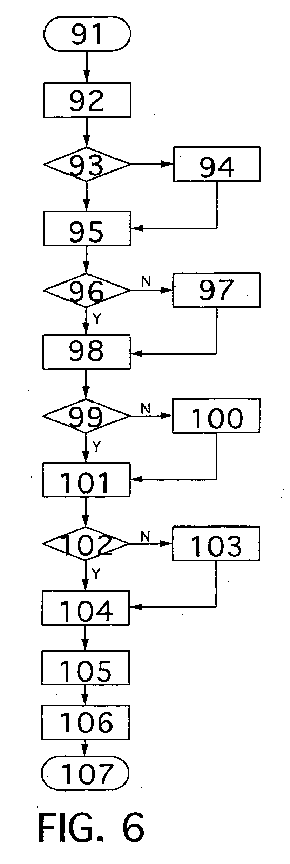

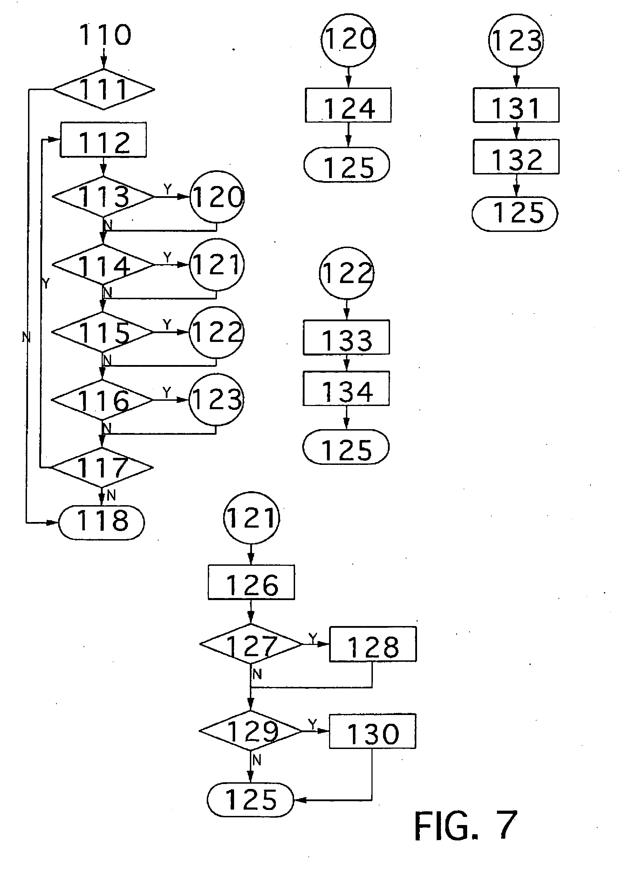

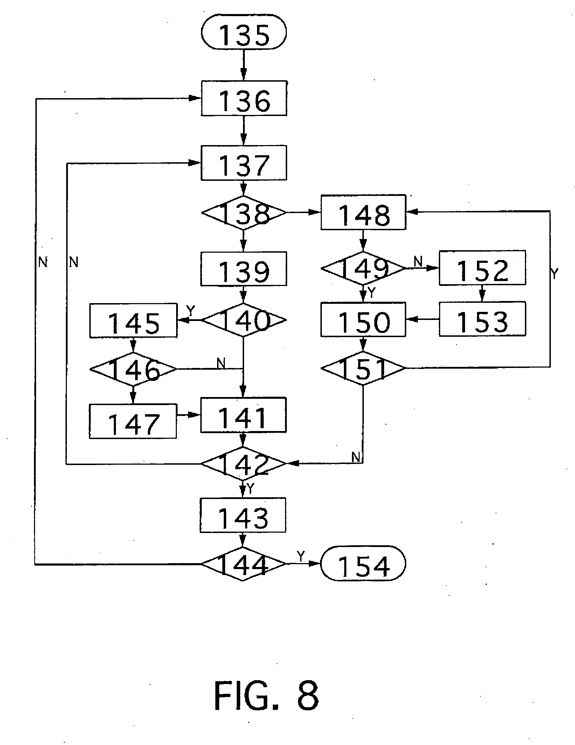

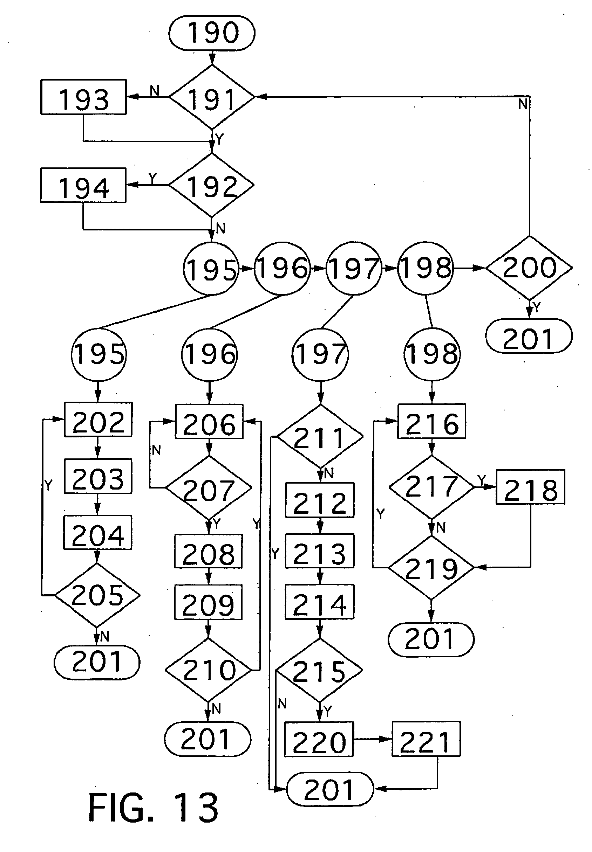

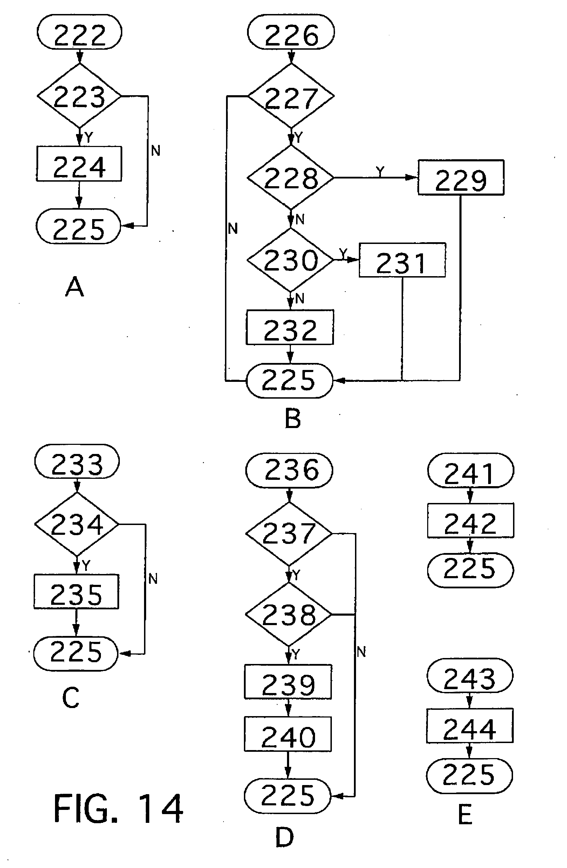

Functions relating to roaming are carried out by module 9 (roaming manager) which in the case of a roaming situation makes use of a mobile network on the basis of user wishes, and makes automatic connection (fig. 13,14) to the network best suited to the user wishes. Roaming is important for instance because the costs and specific characteristics of networks can differ from each other. Module 10 (connection manager) provides for recording or managing (fig. 3-5) of the connections which the system can make. Module 11 (updater) ensures that all data of the system relating to the graphic user interface and modules 2-4 remains up-to-date by for instance performing an update check (fig. 6,7) each time the system makes connection to Internet. A further module (device manager, not shown) provides for recording data relating to connecting devices (fig. 8-12). The display of the modules is carried out by software of the graphic user interface by means of display modules 18-21.

Modules 2-5 are also referred to as element containers, and the data are stored herein in a determined structure, wherein multiple elements can be stored in an element container. A set of attributes of each element can then be stored. A standardized format such as XML is preferably applied for the structure.

Modules 6-8 are device communicators. These modules are adapted, while making use of data relating to the connecting devices, to make contact with networks with which a connecting device can make contact. Here a GSM telephone can for instance make contact with a GSM network by making use of a protocol used by the network. A WiFi device can also make contact with a WiFi hotspot or base station. Other possibilities are LAN network cards or Bluetooth network devices. New forms of network will perhaps become available in the near future to which connection can be made in dynamic manner as according to the present invention. Devices which can make connection to different networks will also become available. The invention is very suitable for connecting displaceable computers in simple manner to the Internet, although the system can likewise make use of locations where a fast fixed connection is available. The software for making a network connection of the operating system of the computer can herein be used, but also the system according to the present invention, with the advantage that, after disconnection of the LAN connection, use is automatically made of an available mobile connection.

If contact is made with the software according to the present invention, contact is also made with update server 30, whereby the software can be updated by means of data stored in a standardized structure such as XML. Using such contact with the server additional services of the server can also be performed on the computer or downloaded to the computer. Such services can be a message service, updating of the languages of the graphic user interface by means of language data stored in a standardized structure such as XML, certificate management, music exchange services, contact management and so on. Such services are performed on the computer by means of additional modules. Such additional modules are loaded onto the computer by means of update module 11 and are displayed in the graphic user interface by means of display modules 18-21.

Control module 12 is adapted to support the above described processes and the storage of the data in a databank. The license module 13 is adapted to determine whether the user of the computer has the right to use specific modules by means of a type of license management. Language module 14 is adapted to provide the system in flexible manner with data relating to languages which can be displayed in the graphic user interface. These data are stored and transported in a standardized format. The graphic user interface can hereby be provided on the fly with a new language where earlier software had to be replaced completely by a new version or a new so-called 'build'. If a user desires a new language, the updater can load the required data from update server 30.

The basic operation of the graphic user interface is based in the modules 15-17, wherein module 15 is the presentation support layer, module 16 comprises the components of the graphic user interface and module 17 comprises the framework components of the graphic user interface.

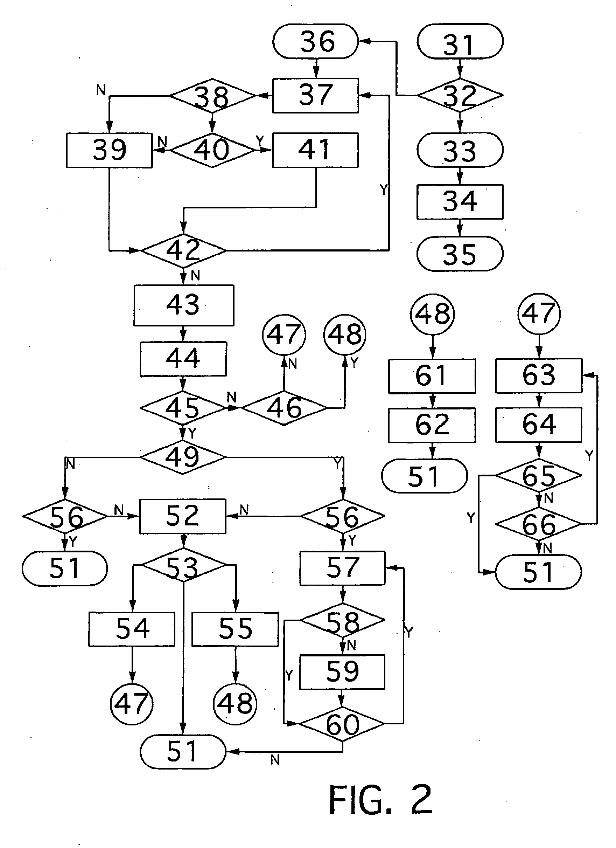

Figure 2 shows an embodiment of the dynamic connection of the computer to the Internet. The method begins in step 31, whereafter in step 32 is determined which operational mode is selected by the user of the computer. The latter here has the choice between manual connection 33 or automatic connection 34. It is also possible to skip this choice if a user wants an automatic connection from then on. If the manual connection is chosen, the method continues in step 34 in which a user selects a connection to which connection is made.

If the automatic mode is selected, the method continues in step 37 where, in order of priority of the connections, a check is made whether a first connection is available. In step 38 is then determined whether the user wishes to use the mobile IP protocol. This can also take place automatically if for instance a default value is known. If this is the case, it is determined in step 40 whether this connection is suitable for the mobile IP protocol or whether this protocol is permitted on this connection. If this is the case, the connection is placed on a mobile IP list in step 41. If it is determined in step 40 that mobile IP is not permitted, the connection is placed on a normal connection list in step 39. It is then determined in step 42 whether another connection has to be checked and, if this is so, the method returns to step 37.

If it is determined in step 42 that all connections have been checked, an availability list of the connections is compiled in step 43 on which all connections from the lists of the previous paragraph are placed. A candidate is determined in step 44. This candidate is the connection with the highest priority which is available for making a connection from the availability list. It is determined in step 45 whether a connection is already active. If this is not the case, the method continues in step 46, and if it is the case the method continues in step 49.

In step 46 is determined whether the candidate connection is on the mobile IP list, whereafter the method continues in step 48 if the candidate is on the mobile IP list and in step 47 if the candidate is on the normal list.

In step 63 following 47 a check is made whether the connection with the highest priority on the normal list is still available and, if this is so, an attempt is made to establish this connection in step 64. In step 65 a check is made whether the connection has been successfully established. If this is not so, it is determined in step 66 whether there are still other connections on the normal list, and the method returns to step 63. If it is determined in step 65 that a connection has been successfully established, in step 51 the method enters a wait state of a predetermined length, such as for instance five seconds. This can however be any desired time duration that is considered optimal, wherein for instance the use of system sources and the risk of not having a connection are offset against each other. It is likewise possible to allow the wait time to be cut short by an event such as the loss of a connection or a connection of a higher priority becoming available, whereafter the system will run through the method or a part thereof again. It is possible to return to step 31, although it is likewise possible to return to for instance step 45.

In step 61 after 48 the mobile IP sub-system is activated. In step 62 all connections on the mobile IP list are then activated, whereafter the system is placed in the wait state 51.

If it is determined in step 45 that a connection is already active, step 49 determines whether the mobile IP protocol is being used. If this is not the case, it is determined in step 50 whether the candidate connection is on the normal list. If this is the case, the method enters the wait state 51 as already specified in the foregoing. If it is determined in step 50 that the candidate is not present on the normal list, the user of the computer is asked in step 52 by means of a dialog screen to switch to the mobile protocol. If it is determined in step 49 that there is a connection with the mobile IP protocol, step 56 determines whether the candidate connection forms part of the mobile IP list. If this is not the case, the user is asked in step 52 to switch to the normal protocol.

If in step 52 the user is asked to switch, the switch is effected in step 53 and a confirmation is fed back to the user of the computer by means of a dialog window. If the mobile protocol was effective in step 53, the existing connection is broken in step 54 and the mobile protocol deactivated. If a switch is not chosen in step 53, a switch is made to the wait state of step 51. In step 47 the method then continues in the manner described in the foregoing. If the mobile protocol was not effective in step 53, the connection is broken in step 55 and the mobile IP protocol is activated. The method then continues in step 48 in the manner described in the foregoing.

If it is determined in step 56 that the candidate is on the mobile IP list, the connections on the mobile IP list are checked in step 57. This step functions as a recovery operation for the mobile connections. A check is then made in step 58 whether the connection is activated. If this is not the case, the connection is activated in step 59 and, if this is the case, a check is made in step 60 whether there are more connections available. If there are more connections, the method returns to step 57 and in the other case the method continues in step 51 in which the method waits as described in the foregoing.

Figures 3-5 show methods of the connecting manager or module 5. Figure 3 shows an embodiment for checking the availability of connections. This module can function parallel to and independently of other modules, and the information can be used by other modules. The method is started in step 67. In step 68 all connections are retrieved on a list. In step 69 a check is made whether the first connection is coupled. If this is the case, the availability of the associated connection is assigned in step 76 to this connection. The method is then continued in step 75.

If it is determined in step 69 that the connection is not coupled, it is determined in step 70 whether the connection is regular. If this is the case, the availability and accessibility of networks which correspond at least in respect of type are determined in step 77. If a connection specifies a bearer, a match with the bearer is also carried out in step 77. The method continues in step 72.

If it is determined in step 70 that the connection is not regular, the availability and accessibility of possible target networks are determined in step 71. The availability and the accessibility of the target networks are determined in step 72. If these values are positive, a connection is marked as available in step 73. If these values are negative, a connection is marked as unavailable. As has been indicated, step 75 determines whether even more connections have to be checked. If this is the case, the method returns to step 69. In the other case the method is ended in step 78.

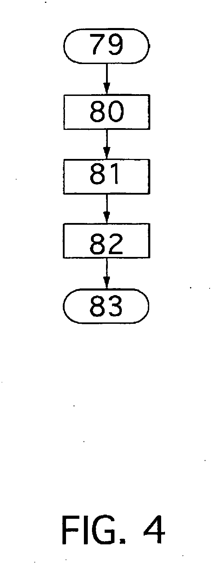

Figure 4 shows an embodiment of a method for adding a connection. The method is started in step 79. In step 80 the user is presented with a list of connection types such as GSM, GPRS, UMTS, CDMA, EV-DO, IXRTT, HSDPA, WLAN or RAS. In step 81 the user is asked for type-specific parameters such as SSID for WLAN or a telephone number for CSD. In step 82 a new connection object is instantiated with the given parameters and the desired priority. The method ends in step 83.

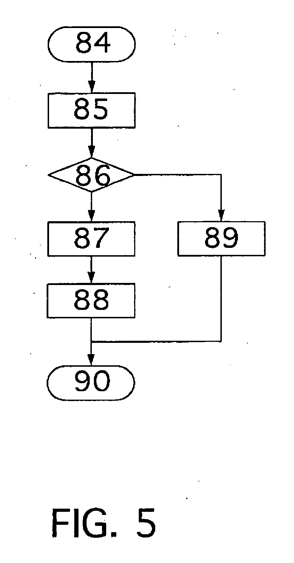

Figure 5 shows a method for removing a connection. After the start 84 a user selects a connection in step 85. In step 86 is determined whether the connection is active, after which, if this is the case, an error message is displayed in step 89. In step 87 the object representing the connection is removed. In step 88 the connection list is then updated so that the removed connection is no longer displayed in step 88. The operation ends in step 90.

In figure 6 and 7 the method of interaction with update server 30 is shown in detail. Figure 6 shows the operation of module 11 in respect of transmitting information from the computer to update server 30. After the start in 91, the MSI information is collected in step 92 in the case the computer has a Microsoft™ operating system. An MSI hash is then validated in step 93. A hash is a short representation of a large amount of data, so that only a small amount of data need be processed or transmitted, and an accurate insight is nevertheless available relating to the large amount of data. The data is added to a data set in step 94.

Configuration information is collected in step 95. The hash configuration is then validated in step 96. If this is invalid, the data is added to the data set in step 97. If it is valid, information relating to the computer, such as about the operating system, is collected in step 98. The hash configuration is validated in step 99. If this is invalid, the data is added to the data set in step 100. If it is valid, information is collected in step 101 concerning the use of connections in the past time period. The hash configuration is then validated in step 102. If this is invalid, it is added in step 103 to the data set. If it is valid, the data set is converted in step 104 into an XML format for transfer of the information in a standardized format. The XML data is then compressed and encoded in step 105. In step 106 the resulting data are sent to update server 30 via the Internet. The operation ends in step 107.

Figure 7 shows an embodiment of the method of module 11 in respect of receiving data from update server 30. The method is started in step 110. In step 111 is determined whether a detected response of the server is valid. If this is not the case, the method is ended in step 118. If it is the case, the next item of the response from the server is processed in step 112. In step 113 is determined whether this next item relates to language data. If this is the case, the method continues in step 120. In step 114 is determined whether this next item is downloadable data, such as new program modules, music or files such as .xls files. If this is the case, the method continues in step 121. In step 115 is determined whether this next item is update data relating to system 1 or for instance the graphic user interface. If this is the case, the method continues in step 122. In step 116 is determined whether this next item is MSI data. If this is the case, the method continues in step 123.

In step 120 the modifying or supplementing of the language information of the graphic user interface is started on the basis of the new data. In step 124 these data are added real-time to the language file for the graphic user interface. In step 125 the method returns to step 114.

In step 121 the download procedure is started in order to load the file from the server onto the computer. The files are downloaded in step 126. In step 127 is determined whether a distribution is required. If this is the case, the files are distributed to the destination folder in step 128. If this is not the case, the method continues immediately in step 129 in which is determined whether execution is required. If this is the case, the execution is performed in step 130, or the method continues immediately in step 125 where this download routine is ended and the method returns to step 115.

The configuration process is started in step 122. The configuration elements to which the information relates is updated in step 133. The modified configuration is made known in step 134. In step 125 the method returns to step 116.

In step 123 the operation for performing a patch on the basis of the MSI data is started. The MSI patch is applied to the system in step 131. In step 132 a restart prompt is displayed if the patch requires this in order to function. In step 125 the method returns to step 117.

These methods of figure 6 and 7 provide for instance the advantage that the user can automatically update his/her system with new languages for the graphic user interface, services in the form of modules and data relating to networks and connecting devices.

Figures 8-12 show embodiments of methods performed by the connecting device manager. This is not shown in figure 1 but forms part of connection 27 between connecting device module 3 and network modules 6-8, in similar manner as modules 9-11 form part of this layer of system 1.

In figure 8 is shown a method for determining and/or recording the time duration for which a device or a network is active. The method is started in step 135. The method waits for an activation request in step 136. In step 137 a list is compiled of all networks visible via the active connecting devices for making connections. For this purpose a search is made for networks on the basis of known data, but it may also be the case that the connecting devices come across networks in step 138 and report this. Update module 11 will then be able to retrieve from the update server data relating to such an as yet unknown network.

In step 148 a list is compiled of the newly detected networks. In step 149 is determined whether the network exists and has not yet been claimed. If the network has not been claimed, the network is claimed for the connecting device in step 150. If in step 149 it is determined that the network has indeed already been claimed, a new network object is instantiated in step 152, whereafter network properties are populated in step 153. The network is then claimed for the connecting device on the basis of these new data. If it is determined in step 151 that there are more new networks, the method returns to step 148. In the other case the method continues in step 142.

If in step 138 it is determined that no new networks are detected, the properties of the networks managed by the connecting device are updated by the connecting device in step 139. This involves data such as the name, the signal strength, the present status (e.g. GPRS) and the like. In step 140 is determined whether a connection request relating to the network is sent. If this is the case, a connection is made to the network in step 145 for the purpose of network activation. In step 146 is determined whether multiplexing can be carried out with the device, for instance for multiple connections. If this is not the case, the method awaits ending of the connection in step 147. If this is however the case, the method continues in step 141 in order to perform device-specific management tasks. This may relate to matters such as recording the strength of different WZ,ANs, whether a GSM communication channel is in operation and/or retrieving SMS messages.

In step 142 is determined whether a communication request is received. If this is not the case, the method returns to step 137. If this is however the case, the method continues in step 143 where networks managed by the connecting device are made unavailable and inactive. It is then determined whether shutdown was desirable in step 144. If this is not the case, the method returns to step 136 and, if this is the case, the operation is ended in step 154.

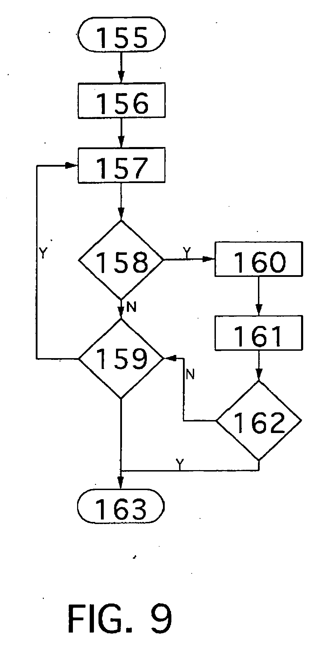

Figure 9 shows an embodiment of a method for observing connecting devices. In this embodiment information about devices is carried in order of priority and transferred to the other modules that can use this information. The method is started in step 155. In step 156 the available connecting devices are ordered per type and priority. In step 157 contact is sought with a device in order to determine whether the device is available in step 158. If the device is not available, the method continues in step 159. If the device is available, all devices with a lower priority are deactivated in step 160. The device is then activated in step 161. In step 162 is determined whether the activation was successful. If the activation was successful, the method is ended in step 163. If the activation was not successful, the method is continued in step 159. This is likewise the case if the device was not available in step 158. In step 159 is determined whether more devices are present in the list. If this is the case, the method continues in step 157. If this is not the case, the method is ended in step 163.

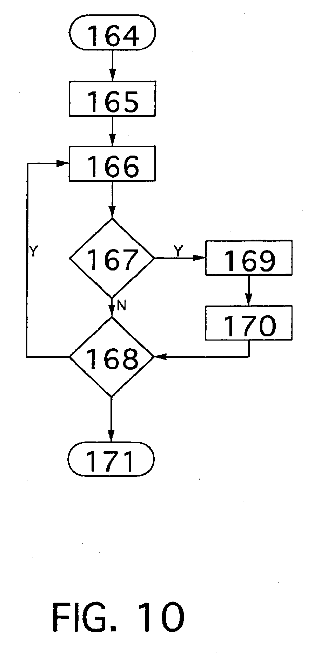

Figure 10 shows an embodiment of a method for monitoring connecting devices. The method is started in step 164. Retrieval of data relating to all connecting devices is started in step 165. Retrieval of the next device is carried out in step 166. In step 167 is determined whether the device represents hardware. If this is not the case, the method continues in step 168. If this is the case, the method continues in step 169 in which the hardware and the associated drivers are detected in for instance an XML file. Availability is updated in step 170. In step 168 is then determined whether there is a further device which has yet to be detected. If this is the case, the method returns to step 166. If this is not the case, the method is ended in step 171.

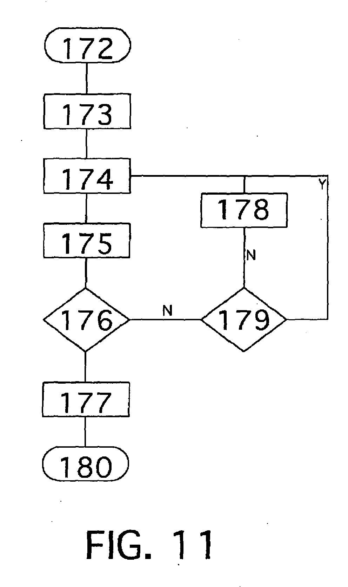

In figure 11 is shown an embodiment for adding a new device. The method is started in step 172. In step 173 the user is shown a list with all known devices. A prompt is then displayed with the request to connect a new device to the computer. The new device is detected in step 175. In step 176 is determined whether the detection was successful. If this is not the case, it is determined whether the drivers have been installed in step 179. If this is not the case, the drivers are installed in step 178. If the drivers have already been installed, the method returns to step 174. If the device was detected in step 176, the method continues in step 177 where the new device is installed with the highest priority. The operation ends in step 180.

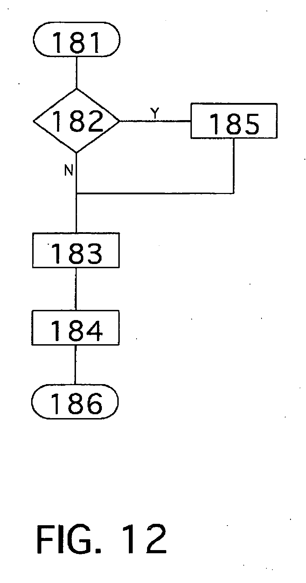

A method is shown in figure 12 for removing a connecting device. The method begins in figure 181. In step 182 is determined whether a device is active. If this is the case, it is inactivated in step 185. In step 183 the device is marked as unavailable, whereafter it is removed in step 184 as instance or object in the module of connecting devices 3.

Figure 13 shows an embodiment of a method for optimizing the choice of connection under roaming conditions. Roaming is the use of a telecommunications network when the home network is not available.

The method is started in step 190. In step 191 is determined whether the method is activated. If this is not the case, it is activated at the request of the user or for instance if the home network is not available in step 193. In step 192 the method is paused if there is connection to the home network, whereafter an event is awaited which makes resumption desirable, such as the loss of the home network.

If resumption occurs or it is determined in step 192 that there is no reason to pause, an immediate scan list is processed in step 195. A delayed scan list is then processed in step 196. A network change is then carried out in step 197. The cleanup operation is then performed wherein devices are reset in step 198. This cleanup operation serves for the purpose of dealing with loops or crashes.

In step 202 the operation begins for scanning of devices on the immediate scan list with the scanning of the first or next device on this list. In step 203 a request is sent to the device to search for networks with which to make contact. In step 204 the device is marked as searching for networks. If it is determined in step 205 that there are more devices on the scan list, the method returns to step 202, and is otherwise ended in step 201.

In step 206 the operation begins for the delayed scan list with the following device on the scan list. In step 207 is determined whether a delay has elapsed since placing of the device on this list. If this is not the case, the method continues in step 206. If this is however the case, the method continues in step 208. In step 208 the device is instructed to scan for networks with which to make contact. In step 209 the device is marked as being busy with scanning. If in step 210 it is determined that more devices are present on the list, the method then continues in step 206. If this is not the case, the process is ended in step 201.

The operation for processing the network changes begins in step 211. In this step is determined whether the home network is available. If this is the case, the method is ended in step 201 since there is no roaming condition. If the home network is not present, all available networks are retrieved in step 212. These networks are compared in step 213 to networks present in a roaming database. Each network is assigned a priority in step 214 based on criteria such as price, speed or type. Whether one or more of the networks corresponds with the database is determined in step 215. If this is not the case, the method is ended. If however there is correspondence, the network which has the highest priority is activated in step 220. The connecting device is marked as being busy with changeover in step 221. The method is then ended in step 201.

In step 216 the cleanup method begins with processing of the following device. In step 217 is determined whether the device is busy and a predetermined time has elapsed. If this is the case, the device mode is reset to normal in step 218. In step 219 is then determined whether there are more devices. If this is the case, the method returns to step 216. If there are no further devices, this method ends in step 201.

After the method 198 it is determined by means of a time delay during step 200 whether it is possible to shut down. If it is determined that shutdown is not possible, the method continues in step 191 and in the other case the method is ended in step 201.

During the process of the previous figure a number of events can occur which are dealt with by means of the following event handlers.

The handler indicated with A begins in step 222 with the event 'device activated'. In step 223 is determined whether or not a GSM device is involved. If a GSM device is involved, the method continues in step 224 with queuing of the device in the delayed scan list. The handler is then ended.

The handler indicated with B begins with the event 'network available' 226. In step 227 is determined whether the network is of the GSM type. If the network is not of the GSM type, the method is ended in step 225. If the network is however of the GSM type, the method continues in step 228. In step 228 is determined whether the network is the home network, in which case it is determined in 229 that the scan is no longer necessary and the device which provided the network is removed from the scan list and the handler is ended. If the network is not the home network, the method continues in step 230 with determining whether the device is busy with scanning or switching. If this is the case, the device is switched back to normal mode in step 231. If it is determined in step 230 that the device is not busy with scanning or switching, the device which provided the network is placed in the immediate scan list. The handler is then ended in step 225.

The handler indicated with C is activated by the event 'device deactivates'. In step 234 is determined whether the device is a GSM device. If this is not the case, the method is ended in step 225. If the device is a GSM device, the device is removed from the scan lists in step 235.

The handler indicated with D is activated by the event 'network not available' 236. In step 237 is determined whether the network is of the GSM type. If this is not the case, the method is ended in step 225. If the network is of the GSM type, the method continues in step 238 with determining whether the network is the home network. If this is not the case, the method is ended in step 225. If it is determined in step 238 that the network is the home network, the device is placed in the immediate scan list in step 239. In step 240 the device is then reset to normal mode. The method is ended in step 225.

The handler indicated with E is activated by means of the event 'connecting manager started' 241. In step 242 the method of figure 13 is paused for a predetermined time. The handler is then ended in step 225. The second part of this handler is activated by means of the event 'connecting manager stopped' 243. The method of figure 13 is then resumed in step 244. The handler ends in step 225.

Figure 15 shows in schematic manner an architecture according to a further embodiment of the present invention. Given a set of functions and properties of a device, it is possible according to the embodiment to carry out functions on this device without knowing details and specific requirements for each device. It is desirable in general terms to know which parameters, such as support options and supporting sub-devices, a device comprises independently of the origin of a device. In order to achieve this an abstraction of a device is defined in addition to a set of operations which can be performed on this abstract device. The functionalities required to support such a device definition (operations and parameters) are delegated to a specific layer within the module of this embodiment. This approach makes it possible to combine functionality of layers at a lower level and to offer the combined functionality hereof in a more abstract form into layers at a higher level. The repetition of this abstraction process results in an API which can access a device as a black box on which specific operations can be performed without the user of the module having knowledge of the complex backgrounds relating to the installation of a device or relating to the special features of a specific device.

As described in the foregoing, the module comprises a plurality of layers, wherein each layer provides functionality which, when added to the total set, can be used by other layers within the module. As shown in figure 15, the API of module 250 enables access to practically all units defining the module. Depending on the level of detail required by the caller of the API, access can be obtained to sub-modules of different higher or lower levels within module 250.

Module 250 comprises packages 257, 258, 259, 260 which are embodied as physical files comprising device definitions and file data ordered in a predetermined format. Such a package comprises a header defining the content of the package, a manifest comprising the device definitions, a search table based on the manifest comprising entries for each file in addition to file data comprising the actual data defined in the manifest and the search table.

Module 250 further comprises a file manager 256 for handling the content of the packages. The file manager provides access to the content of the packages, such as manifest data and file data. The file manager is further responsible for performing file operations for the purpose of the package, such as extracting files and verifying the content of file data. The file manager performs the following functions: providing access to the manifest, validating a package in accordance with the manifest, extracting files from the package, performing file operations such as copying and verifying files, managing extracted files and cleanup of such files, determining file manager references as these are defined within the manifest and/or assisting in the creation of a package.

Module 250 further comprises a package manager 255 for aggregating all available packages and managing an internal database for reference purposes. In respect of a specific connecting device such as a mobile telephone, package manager 255 is able to provide information concerning the package in which the device is defined. Functionality provided by the file manager to the API of the module makes it possible to gain access to the content of individual packages. The package manager is likewise responsible for managing the addition of new packages and the removal of existing packages as a result of requests received. The package manager further has to be called in order to create new packages. The package manager will call other components, such as the file manager, in order to fulfil the task of creating new packages. The responsibilities of the package manager include: enabling listing of all available packages, creating, removing and adding packages, resolving device references in respect of specific packages, monitoring package use.

Module 250 further comprises a device manager 252 for visualizing all defined connecting devices by means of using the database of the module. The package manager provides the option of retrieving the properties from a device and makes it possible for functions to be performed on devices, such as installation thereof, detection thereof and removal thereof. The responsibilities of the device manager are: enabling listing of and gaining access to all defined devices, enabling access to the packages associated with the devices by means of the package manager, making it possible for operations to be performed on the devices, making it possible to gain access to properties of devices.

Module 250 further comprises an execution engine 253 which forms part of device manager 252. The execution engine is responsible for executing sequences for specific operations defined in a device package. The functionality of this module is not directly accessible by means of the API of the module, although indirect access is obtained by means of a request to the device manager to perform an operation on a device.

Module 250 further comprises a virtualizer 254 for setting the API. For some applications such as installing, detecting and removal of devices a specific win32 API is required, the so-called setup API. This API makes it possible to gain access to the device manager and makes it possible to manage and to list all devices installed on a Windows computer. Different sessions of Windows support different sets of setup API functionality, for the purpose of which a virtualization layer has been developed according to the present embodiment. This layer automatically determines which specific setup API functionality is supported on the present Windows computer, and provides the desired functionality without the user having to have knowledge for this purpose. Within the inventive concept such a method can likewise be performed under another operating system.

An example of the embodiment described in the foregoing relates to asking a modem to report the visible GSM networks. The command 'AT+COPS?' is for example sent for this purpose to the modem. After a time (the modem needs this time to search for the visible networks) a reply is sent with a standardized structure. For some types of telephone a different command is necessary to retrieve the network list, or the reply has a deviating structure. A problem here is that different telephones or communication devices which can be used as connecting device have to be accessed in different ways.

Figure 16 shows schematically the communication between the computer and the telephone. The GSM module M sends a request 261 to the DMM API A by means of a search network instruction 262, which is the standard 'AT+COPS?'. This is converted in the DMM API to the non-standard instruction 'AT+COPS123?' 263 which is intelligible to the device. The device D then carries out the instruction in step 264 and reports the results in its own format in step 265 to the API A. This receives the device-specific data/results and converts these in step 266 into a generic format. In step 267 the API reports the formatted results to the GSM module which processes the found networks in step 268. In this manner a plurality of general instructions can be processed by different devices requiring device-specific instructions for this purpose.

The prior art solves the problem of having the computer make contact with the telephone by means of software by including all possible variations in the software. This is a static solution wherein any change requires modification of software.

According to the present embodiment this problem is solved by defining an abstract intermediate layer which translates the command 'search network' on the basis of dynamic translation tables into the command required for the device with which communication is taking place at that moment. The reply that the device sends back is likewise translated, wherein this reply is converted by the intermediate layer from a device-specific format into a generic format, whereby the device-specific exceptions in the software according to the prior art are unnecessary. Providing a translation module per device is much simpler to implement and to manage, particularly on a very large number of geographically remote computers, than modifying the build of the communication software.

The present invention is described in detail on the basis of preferred embodiments. These are not limitative for the scope of protection, and different aspects can be varied relative to each other within the understanding of the text. The rights sought are defined by the appended claims.

## Claims

1. Method for connecting a computer in dynamic manner to a computer network such as the Internet via at least one selectable connection from a number of selectable connections, of which at least one is wireless, which makes use of a network and at least one selectable connecting device from a number of selectable devices, at least one allows for a wireless connection, which can be coupled thereto, wherein the connections can be included in a priority list, the method being performed at the computer and comprising steps for:
- defining at least one set of network connections by means of checking available connecting devices,
- defining the available connection with the highest priority as candidate connection,
- if a connection is active, breaking this connection and making connection to the candidate connection if this is other than the active connection,
- if no connection is active, making connection by means of the candidate connection,
- repeating these steps after a predetermined first time period or on occurrence of a predetermined event, such as the addition or removal of a connecting device, the method being **characterized by** steps for:
- collecting information concerning the use of connections in the past time period and configuration information of the computer for transferring the collected information to a server.

2. Method as claimed in claim 1, comprising steps for downloading from an update server data relating to connection devices, networks, service modules and/or a user interface, wherein these data are transferred in a standardized format such as an XML format.

3. Method as claimed in claim 1 or 2, comprising steps for collecting data relating to installation data in respect of software on the computer for performing the method, hardware and/or operating system of the computer, and converting this information to a standardized data format such as XML for transferring thereof as data request to the update server.

4. Method as claimed in one or more of the foregoing claims, comprising steps for converting data sent to the update server in a configuration key.

5. Method as claimed in one or more of the foregoing claims, comprising steps for encoding the data for transmission.

6. Method as claimed in one or more of the foregoing claims, comprising steps for selecting a connection under roaming conditions, wherein a priority can be assigned to parameters of connections.

7. Method as claimed in one or more of the foregoing claims, wherein the step for defining the set of available network connections comprises steps (157) for detecting connecting devices.

8. Method as claimed in one or more of the foregoing claims, comprising steps (164) for obtaining data relating to the connecting devices.

9. Method as claimed in one or more of the foregoing claims, wherein the set of the available connections is defined on the basis of available connecting devices.

10. Method as claimed in one or more of the foregoing claims, comprising steps (178) for installing connecting devices.

11. Method as claimed in one or more of the foregoing claims, comprising steps for displaying the set of available network connections in a list of a user interface.

12. Method as claimed in one or more of the foregoing claims, wherein the connections can be categorized on the basis of a property of being able to function under a flexible connection regime, such as mobile IP, comprising steps for:
- changing regime if the candidate connection requires a regime other than the existing connection,
- connecting to network connections under the flexible regime if the candidate can function under a flexible connection regime,
- connecting under a normal regime if the candidate does not function under a flexible connection regime.

13. Method as claimed in one or more of the foregoing claims, comprising steps for changing connection, within the predetermined repeat time, within the category of connections able to function under the flexible regime, comprising steps for:
- determining a set of connections functioning under the flexible regime by means of checking for accessibility,
- determining the available connection with the highest priority as flexible candidate,
- changing connection from the existing connection to the flexible candidate,
- repeating these steps after a predetermined second time period or o a predetermined event.

14. Method as claimed in one or more of the foregoing claims, wherein the connections comprise wireless cohnections such as WiFi, GSM, GPRS, UMTS, DECT, CSD and/or EDGE.

15. Method as claimed in one or more of the foregoing claims, comprising steps for observing whether a connection is available, wherein the availability of the connections of the priority list are successively checked for the availability thereof, and the availability of the networks used for the connection.

16. Method as claimed in claim 15, comprising steps for
- determining whether the home network is available,
- determining which networks are available if the home network is not available,
- connecting to a second network on the basis of predetermined priorities in respect of parameters of the connections to be established, such as connection speed, connection costs or connecting network.

17. Method as claimed in one or more of the foregoing claims, comprising steps for taking into account priority data relating to connecting devices.

18. Update server for updating data relating to a connection manager operated on a computer for connecting the computer in dynamic manner to a computer network such as the Internet via at least one known selectable connection that is selectable from a number of selectable connections, of which at least one is wireless, which makes use of a network and at least one known selectable connecting device that is selectable from a number of selectable devices, at least one allows for a wireless connection, wherein the known connections can be included in a priority list, comprising:
- data storage means for storing on storage media data relating to at least connections, connecting devices, networks and/or messages,
- request receiving means for receiving a request relating to stored data,
- request processing means for processing the requests,
- data transmitting means for transmitting stored data to a connection client on the basis of the request, **characterized by**:
- data receiving and processing means for receiving from the computer information collected at the computer concerning the use of connections in the past time period andconfiguration information of the computer and for processing this received information.

19. Computer program product comprising instructions that when executed on a computer perform the method steps according to claims 1-17.

20. System for updating connection data on a client computer, comprising:
- an update server as claimed in claim 18,
- a number of connection clients for connecting a computer to a computer network, such as the Internet, via at least one definable selectable connection which makes use of a network and at least one selectable connecting device, wherein the known connections can be included in a priority list, wherein each connection client is adapted to perform the method steps according to one or more of the claims 1-17 and/or wherein the connection client makes use of a computer program product according to claim 19.

## Patentansprüche

1. Verfahren zum dynamischen Verbinden eines Computers mit einem Computernetzwerk wie dem Internet über zumindest eine auswählbare Verbindung aus einer Reihe von auswählbaren Verbindungen, von denen zumindest eine drahtlos ist, unter Verwendung eines Netzwerks und zumindest einer auswählbaren Verbindungsvorrichtung aus einer Reihe von auswählbaren Vorrichtungen, wobei zumindest eine eine drahtlose Verbindung ermöglicht, die mit dieser verbunden werden kann, wobei die Verbindungen in eine Prioritätenliste aufgenommen werden können, wobei das Verfahren am Computer ausgeführt wird, umfassend Schritte zum:
- Definieren zumindest eines Satzes von Netzwerkverbindungen durch Prüfen auf verfügbare Verbindungsvorrichtungen,
- Definieren der verfügbaren Verbindung mit der höchsten Priorität als Kandidatenverbindung,
- wenn eine Verbindung aktiv ist, Brechen dieser Verbindung und Herstellen einer Verbindung mit der Kandidatenverbindung, wenn es sich bei dieser nicht um die aktive Verbindung handelt,
- wenn keine Verbindung aktiv ist, Herstellen einer Verbindung über die Kandidatenverbindung,
- Wiederholen dieser Schritte nach einer vorab definierten ersten Zeitperiode oder bei Auftreten eines vorab definierten Ereignisses wie die Hinzufügung oder Entfernung einer Verbindungsvorrichtung, wobei das Verfahren **gekennzeichnet ist durch** Schritte zum:
- Sammeln von Informationen betreffend die Verwendung von Verbindungen in der vergangenen Zeitperiode und Konfigurationsinformationen des Computers zum Übertragen der gesammelten Informationen an einen Server.

2. Verfahren nach Anspruch 1, umfassend Schritte zum Herunterladen von Daten, die sich auf die Verbindungsvorrichtungen, Netzwerke, Dienstmodule und/oder eine Benutzerschnittstelle beziehen, von einem Updateserver, wobei diese Daten in einem Standardformat wie dem XML-Format übertragen werden.

3. Verfahren nach Anspruch 1 oder 2, umfassend Schritte zum Sammeln von Daten, die sich auf Installationsdaten in Bezug auf Software am Computer zur Ausführung des Verfahrens, auf Hardware und/oder Betriebssystem am Computer beziehen, und Umwandeln dieser Informationen in ein Standarddatenformat wie XML, um sie als Datenanfrage an den Updateserver zu übertragen.

4. Verfahren nach einem oder mehreren der vorhergehenden Ansprüche, umfassend Schritte zum Umwandeln von Daten, die an den Updateserver gesendet werden, in einen Konfigurationsschlüssel.

5. Verfahren nach einem oder mehreren der vorhergehenden Ansprüche, umfassend Schritte zum Kodieren der Daten für die Übertragung.

6. Verfahren nach einem oder mehreren der vorhergehenden Ansprüche, umfassend Schritte zum Auswählen einer Verbindung unter Roamingbedingungen, wobei eine Priorität Verbindungsparametern zugewiesen werden kann.

7. Verfahren nach einem oder mehreren der vorhergehenden Ansprüche, wobei der Schritt des Definierens des Satzes von verfügbaren Netzwerkverbindungen Schritte (157) zum Detektieren von Verbindungsvorrichtungen umfasst.

8. Verfahren nach einem oder mehreren der vorhergehenden Ansprüche, umfassend Schritte (164) zum Erhalten von Daten, die sich auf die Verbindungsgvorrichtungen beziehen.

9. Verfahren nach einem oder mehreren der vorhergehenden Ansprüche, wobei der Satz verfügbarer Verbindungen auf Basis von verfügbaren Verbindungsvorrichtungen definiert wird.

10. Verfahren nach einem oder mehreren der vorhergehenden Ansprüche, umfassend Schritte (178) zum Installieren von Verbindungsvorrichtungen.

11. Verfahren nach einem oder mehreren der vorhergehenden Ansprüche, umfassend Schritte zum Anzeigen des Satzes verfügbarer Netzwerkverbindungen in einer Liste einer Benutzerschnittstelle.

12. Verfahren nach einem oder mehreren der vorhergehenden Ansprüche, wobei die Verbindungen auf Basis einer Eigenschaft, in der Lage zu sein, unter einem flexiblen Verbindungssystem wie mobile IP zu funktionieren, kategorisiert wird, umfassend Schritte zum:
- Ändern des Systems, wenn für die Kandidatenverbindung ein anderes System als die bestehende Verbindung erforderlich ist,
- Verbinden mit Netzwerkverbindungen unter dem flexiblen System, wenn der Kandidat unter einem flexiblen Verbindungssystem funktionieren kann,
- Verbinden unter einem normalen System, wenn der Kandidat unter einem flexiblen Verbindungssystem nicht funktionieren kann.

13. Verfahren nach einem oder mehreren der vorhergehenden Ansprüche, umfassend Schritte zum Ändern der Verbindung innerhalb der vorab definierten Wiederholungszeit innerhalb der Kategorie von Verbindungen, die in der Lage sind, unter dem flexiblen System zu funktionieren, umfassend die Schritte zum:
- Bestimmen eines Satzes von Verbindungen, die unter dem flexiblen System funktionieren, durch Prüfen auf Verfügbarkeit,
- Bestimmen der verfügbaren Verbindung mit der höchsten Priorität als flexibler Kandidat,
- Ändern der Verbindung von der bestehenden Verbindung auf den flexiblen Kandidaten,
- Wiederholen dieser Schritte nach einer vorab definierten zweiten Zeitperiode oder einem vorab definierten Ereignis.

14. Verfahren nach einem oder mehreren der vorhergehenden Ansprüche, wobei die Verbindungen drahtlose Verbindungen wie WiFi, GSM, GPRS, UMTS, DECT, CSD und/oder EDGE umfassen.

15. Verfahren nach einem oder mehreren der vorhergehenden Ansprüche, umfassend Schritte zum Beobachten, ob eine Verbindung verfügbar ist, wobei die Verfügbarkeit der Verbindungen der Prioritätenliste sukzessive auf deren Verfügbarkeit und die Verfügbarkeit der für die Verbindung verwendeten Netzwerke geprüft wird.

16. Verfahren nach Anspruch 15, umfassend Schritte zum:
- Bestimmen, ob das Heimnetzwerk verfügbar ist,
- Bestimmen, welche Netzwerke verfügbar sind, wenn das Heimnetzwerk nicht verfügbar ist,
- Verbinden mit einem zweiten Netzwerk auf Basis der vorab definierten Prioritäten in Bezug auf Parameter der Verbindungen, die es zu erstellen gilt, wie Verbindungsgeschwindigkeit, Verbindungskosten oder Verbindungsnetzwerk.

17. Verfahren nach einem oder mehreren der vorhergehenden Ansprüche, umfassend Schritte zum Berücksichtigen von Prioritätendaten, die sich auf Verbindungsvorrichtungen beziehen.

18. Updateserver zum Aktualisieren von Daten, die sich auf einen Verbindungsmanager beziehen, der auf einem Computer ausgeführt wird, zum dynamischen Verbinden des Computers mit einem Computernetzwerk wie dem Internet über zumindest eine bekannte auswählbare Verbindung, die aus einer Reihe von auswählbaren Verbindungen auswählbar ist, von denen es sich bei zumindest einer um eine drahtlose handelt, unter Verwendung eines Netzwerks und zumindest einer bekannten auswählbaren Verbindungsvorrichtung, die aus einer Reihe von auswählbaren Vorrichtungen auswählbar ist, wobei zumindest eine eine drahtlose Verbindung ermöglicht, wobei die bekannten Verbindungen in eine Prioritätenliste aufgenommen werden können, umfassend:
- Datenspeichermittel zum Speichern von Daten, die sich auf zumindest Verbindungen, Verbindungsvorrichtungen, Netzwerke und/oder Nachrichten beziehen, auf einem Speichermedium,
- Anfrageempfangsmittel zum Empfangen einer Anfrage, die sich auf gespeicherte Daten bezieht,
- Anfrageverarbeitungsmittel zum Verarbeiten der Anfragen,
- Datenübertragungsmittel zum Übertragen von gespeicherten Daten an einen Verbindungs-Client auf Basis der Anfrage, **gekennzeichnet durch**:
- Datenempfangs- und Datenverarbeitungsmittel zum Empfangen von Informationen, die am Computer gesammelt wurden und die Verwendung von Verbindungen in der vergangenen Zeitperiode betreffen, und Konfigurationsinformationen des Computers zum Verarbeiten der erhaltenen Informationen, vom Computer.

19. Computerprogrammprodukt, umfassend Instruktionen, das, wenn es auf einem Computer ausgeführt wird, die Verfahrensschritte nach einem der Ansprüche 1 bis 17 ausführt.

20. System zum Aktualisieren von Verbindungsdaten auf einem Client-Computer, umfassend:
- einen Aktualisierungsserver nach Anspruch 18,
- eine Reihe von Verbindungs-Clients zum Verbinden eines Computers mit einem Computernetzwerk wie dem Internet über zumindest eine definierbare auswählbare Verbindung unter Verwendung eines Netzwerks und zumindest einer auswählbaren Verbindungsvorrichtung, wobei die bekannten Vorrichtungen in eine Prioritätenliste aufgenommen werden können, wobei jeder Verbindungs-Client eingerichtet ist, um die Verfahrensschritte nach einem oder mehreren der Ansprüche 1 bis 17 durchzuführen und/oder wobei der Verbindungs-Client ein Computerprogrammprodukt nach Anspruch 19 verwendet.

## Revendications

1. Procédé pour connecter un ordinateur de manière dynamique à un réseau informatique tel que l'Internet par l'intermédiaire d'au moins une connexion sélectionnable parmi une pluralité de connexions sélectionnables, dont au moins une est sans fil, qui utilise un réseau et au moins un dispositif de connexion sélectionnable parmi une pluralité de dispositifs sélectionnables, au moins un permettant une connexion sans fil, qui peut être couplé à celui-ci, où les connexions peuvent être incluses dans une liste de priorité, le procédé étant conduit au niveau de l'ordinateur et comprenant des étapes pour :
- définir au moins un ensemble de connexions réseau au moyen de la vérification des dispositifs de connexion disponibles,
- définir la connexion disponible avec la priorité la plus élevée en tant que connexion candidate,
- si une connexion est active, la rupture de cette connexion et l'établissement de la connexion avec la connexion candidate si celle-ci est autre que la connexion active,
- si aucune connexion n'est active, établir la connexion au moyen de la connexion candidate,
- répéter ces étapes après une première période prédéterminée ou lors de l'occurrence d'un événement prédéterminé, tel que l'ajout ou le retrait d'un dispositif de connexion, le procédé étant **caractérisé par** des étapes pour :
- collecter des informations concernant l'utilisation de connexions dans la période passée et des informations de configuration de l'ordinateur pour transférer les informations collectées vers un serveur.

2. Procédé selon la revendication 1, comprenant des étapes pour télécharger depuis un serveur de mise à jour des données concernant des dispositifs de connexion, des réseaux, des modules de service et/ou une interface utilisateur, où ces données sont transférées dans un format standardisé tel qu'un format XML.

3. Procédé selon la revendication 1 ou 2, comprenant des étapes pour collecter des données concernant les données d'installation en ce qui concerne le logiciel sur l'ordinateur pour exécuter le procédé, le matériel et/ou le système d'exploitation de l'ordinateur, et convertir ces informations dans un format de données standardisé tel que XML pour transférer celles-ci sous la forme d'une demande de données au serveur de mise à jour.

4. Procédé selon une ou plusieurs des revendications précédentes, comprenant des étapes pour convertir les données envoyées au serveur de mise à jour dans une clé de configuration.

5. Procédé selon une ou plusieurs des revendications précédentes, comprenant des étapes pour coder les données pour transmission.

6. Procédé selon une ou plusieurs des revendications précédentes, comprenant des étapes pour sélectionner une connexion dans des conditions d'itinérance, où une priorité peut être attribuée à des paramètres de connexions.

7. Procédé selon une ou plusieurs des revendications précédentes, dans lequel l'étape pour définir l'ensemble de connexions réseau disponibles comprend des étapes (157) pour détecter des dispositifs de connexion.

8. Procédé selon une ou plusieurs des revendications précédentes, comprenant des étapes (164) pour obtenir des données associées aux dispositifs de connexion.

9. Procédé selon une ou plusieurs des revendications précédentes, dans lequel l'ensemble de connexions disponibles est défini sur la base des dispositifs de connexion disponibles.

10. Procédé selon une ou plusieurs des revendications précédentes, comprenant des étapes (178) pour installer des dispositifs de connexion.

11. Procédé selon une ou plusieurs des revendications précédentes, comprenant des étapes pour afficher l'ensemble de connexions réseau disponibles dans une liste d'interface utilisateur.

12. Procédé selon une ou plusieurs des revendications précédentes, dans lequel les connexions peuvent être classifiées sur la base d'une propriété consistant à pouvoir fonctionner dans un régime de connexion flexible, tel que IP mobile, comprenant des étapes pour :
- modifier le régime si la connexion candidate requiert un régime autre que la connexion existante,
- établir une connexion à des connexions réseau sous le régime flexible si le candidat peut fonctionner sous un régime de connexion flexible,
- établir une connexion sous un régime normal si le candidat ne fonctionne pas sous un régime de connexion flexible.

13. Procédé selon une ou plusieurs des revendications précédentes, comprenant des étapes pour modifier une connexion, dans le temps de répétition prédéterminé, dans la catégorie de connexions capable de fonctionner sous le régime flexible, comprenant des étapes pour :
- déterminer un ensemble de connexions fonctionnant sous le régime flexible au moyen d'une vérification d'accessibilité,
- déterminer la connexion disponible avec la plus haute priorité en tant que candidat flexible,
- modifier la connexion de la connexion existante au candidat flexible,
- répéter ces étapes après une deuxième période prédéterminée ou un événement prédéterminé.

14. Procédé selon une ou plusieurs des revendications précédentes, dans lequel les connexions comprennent des connexions sans fil telles que WiFi, GSM, GPRS, UMTS, DECT, CSD et/ou EDGE.

15. Procédé selon une ou plusieurs des revendications précédentes, comprenant des étapes pour observer si une connexion est disponible, où la disponibilité des connexions de la liste de priorité est successivement vérifiée pour la disponibilité de celles-ci, et la disponibilité des réseaux utilisés pour la connexion.

16. Procédé selon la revendication 15, comprenant des étapes pour
- déterminer si le réseau domestique est disponible,
- déterminer quels réseaux sont disponibles si le réseau domestique n'est pas disponible,
- établir une connexion à un deuxième réseau sur la base de priorités prédéterminées en termes de paramètres des connexions à établir, tels que la vitesse de connexion, les coûts de connexion ou le réseau de connexion.

17. Procédé selon une ou plusieurs des revendications précédentes, comprenant des étapes pour prendre en compte les données de priorité relatives aux dispositifs de connexion.

18. Serveur de mise à jour pour mettre à jour des données associées à un gestionnaire de connexion exécuté sur un ordinateur pour connecter l'ordinateur de manière dynamique à un réseau informatique tel que l'Internet par l'intermédiaire d'au moins une connexion sélectionnable connue qui est sélectionnable parmi une pluralité de connexions sélectionnables, dont au moins une est sans fil, qui utilise un réseau et au moins un dispositif de connexion sélectionnable qui est sélectionnable parmi une pluralité de dispositifs sélectionnables, au moins un permettant une connexion sans fil, où les connexions peuvent être incluses dans une liste de priorité, comprenant :
- des moyens de stockage de données pour stocker sur un support de stockage des données relatives à au moins des connexions, des dispositifs de connexion, des réseaux et/ou des messages,
- des moyens de réception de demande pour recevoir une demande relative aux données stockées,
- des moyens de traitement de demande pour traiter les demandes,
- des moyens de transmission de données pour transmettre des données stockées à un client de connexion sur la base de la demande,
- des moyens de réception et de traitement de données pour recevoir depuis l'ordinateur des informations collectées au niveau de l'ordinateur concernant l'utilisation de connexions dans la période passée et des informations de configuration de l'ordinateur et pour traiter ces informations reçues.

19. Produit de programme informatique comprenant des instructions qui, lorsqu'elles sont exécutées sur un ordinateur, exécutent les étapes de procédé selon les revendications 1 à 17.

20. Système pour mettre à jour des données de connexion sur un ordinateur client, comprenant :
- un serveur de mise à jour selon la revendication 18,
- une pluralité de clients de connexion pour connecter un ordinateur à un réseau informatique, tel que l'Internet, par l'intermédiaire d'au moins une connexion sélectionnable définissable qui utilise un réseau et au moins un dispositif de connexion sélectionnable, où les connexions connues peuvent être incluses dans une liste de priorité, où chaque client de connexion est adapté pour exécuter les étapes de procédé selon une ou plusieurs des revendications 1 à 17 et/ou où le client de connexion utilise un produit de programme informatique selon la revendication 19.
